# EUROPÄISCHE PATENTSCHRIFT

(11) **EP 1 166 003 B1**
(45) Veröffentlichungstag und Bekanntmachung des Hinweises auf die Patenterteilung: **25.05.2005**
(21) Anmeldenummer: 00920618.6
(22) Anmeldetag: 30.03.2000
(51) Int. Cl.: F16L 37/084, F16L 37/23

(54) **KUPPLUNGSTEIL FÜR EINE FLUIDKUPPLUNGSANORDNUNG, INSBESONDERE EINE SCHLAUCHKUPPLUNG, SOWIE FLUIDKUPPLUNGSANORDNUNG**
COUPLING PART FOR A FLUID COUPLING DEVICE, ESPECIALLY A HOSE COUPLING, AS WELL AS A FLUID COUPLING DEVICE ITSELF
PIECE DE RACCORDEMENT D'UN DISPOSITIF DE RACCORDEMENT FLUIDIQUE, NOTAMMENT UN RACCORD SOUPLE, ET DISPOSITIF DE RACCORDEMENT FLUIDIQUE

(30) Priorität: 03.04.1999 DE 19915291
(43) Veröffentlichungstag der Anmeldung: 02.01.2002
(73) Patentinhaber: GARDENA Manufacturing GmbH, 89079 Ulm (DE)
(72) Erfinder: LINDERMEIR, Wolfgang, D-89617 Untermarchtal (DE); HÄUFELE, Reiner, D-88471 Laupheim (DE); SCHAUB, Ulrich, D-89073 Ulm (DE)
(74) Vertreter: Patentanwälte Ruff, Wilhelm, Beier, Dauster & Partner
(86) Internationale Anmeldenummer: PCT/EP2000/002776
(87) Internationale Veröffentlichungsnummer: WO 2000/060269

(56) Entgegenhaltungen:
- EP-A- 0 926 422
- DE-A- 2 651 855
- JP-A- 10 002 474
- US-A- 4 915 421
- US-A- 5 871 241

## Beschreibung

Die Erfindung betrifft ein Kupplungsteil für eine Fluidkupplungsanordnung, insbesondere eine Schlauchkupplung, die zwei durch Ineinanderstecken in eine Kupplungsstellung bringbare und durch Auseinanderziehen lösbare Kupplungsteile aufweist, wobei ein Kupplungsteil eine zur Verriegelung der Kupplungsteile in der Kupplungsstellung vorgesehene Verriegelungseinrichtung enthält, wobei die Verriegelungseinrichtung mindestens ein axial nicht verschiebbares und an einem Grundkörper angebrachtes Verriegelungselement und ein damit zusammenwirkendes Betätigungselement in der Form einer den Grundkörper umschließenden Hülse aufweist, die durch eine in eine Freigaberichtung verlaufende Freigabebewegung zwischen einer Haltestellung, in welcher die Kupplungsteile auszugsicher gehalten sind und einer Freigabestellung, in welcher die Kupplungsteile voneinander abziehbar sind, umstellbar ist.

Lösbare Fluidkupplungsanordnungen sind beispielsweise aus Schnellkupplungs-Stecksystemen bekannt. Bei diesen kann die im wesentlichen fluiddichte Kupplungsstellung durch einfaches Ineinanderstecken eines Kupplungsinnenteils und eines Kupplungsaußenteiles hergestellt werden. Bei Schnellkupplungen dieser Art hat eines der Kupplungsteile, in der Regel das Kupplungsaußenteil, eine umschaltbare Verriegelungseinrichtung, die zum Verriegeln der Kupplungsteile in der Kupplungsstellung vorgesehen ist, um ein ungewolltes Auseinanderziehen der Kupplungsteile zu verhindern. Die Verriegelungseinrichtung hat mindestens ein an einem Grundkörper des Kupplungsteiles gelagertes Verriegelungselement und ein damit zusammenwirkendes Betätigungselement, das häufig als eine den Grundkörper des Kupplungsteiles umgebende Betätigungshülse ausgebildet ist. Die Verriegelungseinrichtung ist durch eine in eine Freigaberichtung verlaufende Freigabebewegung des Betätigungselementes aus einer Haltestellung in eine Freigabestellung zwischen einer Verriegelungskonfiguration und einer Freigabekonfiguration umstellbar. Dabei sind in der Verriegelungskonfiguration die in Kupplungsstellung ineinandergesteckten Kupplungsteile auszugssicher durch das mindestens eine Verriegelungselement gehalten und in der Freigabekonfiguration voneinander abziehbar.

In der DE 17 75 302 sind verschiedene Ausführungsformen derartiger Fluidkupplungsanordnungen gezeigt, die sich durch besonders einfache Bedienbarkeit auszeichnen. Eine mit einer einzigen Hand bedienbare Ausführungsform hat am Kupplungsaußenteil ein Betätigungselement in Form einer Hülse, das relativ zu einem Grundkörper des Kupplungsteiles axial verschiebbar ist, in einer Haltestellung die Verriegelungselemente in Verriegelungskonfiguration hält und durch Verschiebung in Längsrichtung der Kupplungsanordnung diese freigibt.

Es hat sich in der Praxis gezeigt, daß es bei dieser aufgrund ihrer einfachen Bedienbarkeit sehr vorteilhaften Ausführungsform in der Praxis unter ungünstigen Umständen dazu kommen kann, daß die Verriegelungseinrichtung unbeabsichtigt in ihre Freigabekonfiguration umgestellt wird, beispielsweise durch spielende Kinder oder bei einer Längsbewegung der Hand eines Benutzers entlang einer die Kupplung aufweisenden Fluidleitung. Der unbeabsichtigte Fluidaustritt kann teilweise unangenehme Folgen haben.

Bei einem aus der DE 34 90 017 bekannten Typ von Schnellkupplung ist schon eine Maßnahme vorgeschlagen worden, um ein solches zufälliges oder unbeabsichtigtes Verschieben einer Betätigungshülse unmöglich zu machen oder zumindest zu erschweren. Dazu wird vorgeschlagen, einen von der Betätigungshülse getragenen und in Richtung auf die Längsachse der Kupplung sowie von dieser weg zwischen einer Halte- und einer Freigabestellung bewegbare Anschlagsknopf und mit diesem in dessen Haltestellung zusammenwirkende Widerlagermittel bereitzustellen, um eine Bewegung der Betätigungshülse in die Freigabestellung zu verhindern, wobei der Anschlagknopf nach Lösen der Widerlagermittel in seine Freigabestellung bewegbar ist. Zum Entriegeln der Haltestellung muß zunächst der Anschlagsknopf gedrückt werden, erst dann kann die Betätigungshülse verschoben werden. Die hierdurch mögliche Sperre der Betätigungshülse ist zwar wirksam, jedoch ist die Bedienung umständlich und der Aufbau der Kupplungsanordnung aufgrund der Vielzahl zusammenwirkender Teile kompliziert.

In der JP 10-002474 A ist eine Kupplung gezeigt, zu deren Betätigung ebenfalls zwei Betätigungselemente bewegt werden müssen. Das erste Betätigungselement ist ein Ring, der in axial fester Position auf einem Grundkörper der Kupplung angeordnet und relativ zu diesem drehbar ist. Das zweite Betätigungselement ist eine Ringhülse, die axial verschiebbar auf dem tätigungselement ist eine Ringhülse, die axial verschiebbar auf dem Grundkörper gelagert ist und in einer Axialposition die radiale Verschiebung von Haltekugeln verhindert, die als Verriegelungselemente für einen eingesteckten Kupplungsnippel dienen. Eine Verschiebung der Ringhülse in Richtung des axial festliegenden ersten Ringes gibt die Haltekugel für eine Radialbewegung und zur Freigabe des Kupplungsnippel frei. Eine solche axiale Verschiebung der Ringhülse ist nur in einer Drehstellung des ersten Ringes möglich, während sie durch Drehung um 90° erreichbaren zweiten Stellung blockiert ist. Zur Bedienung dieses Kupplungsteiles ist jetzt die Betätigung von zwei gesonderten Betätigungselementen erforderlich, was die Bedienung umständlich macht. Außerdem ist der Aufbau des Kupplungsteiles durch die Vielzahl beweglicher Teile kompliziert.

In der DE 26 51 855 ist ein anderes Kupplungssystem gezeigt, bei welchem als Verriegtungselement eine radial verschiebbare Kugel vorgesehen ist. Die radiale Verschiebung der Haltekugel wir durch eine um die Längsachse der Kupplung drehbare Hülse freigegeben bzw. blockiert. Diese Betätigungshülse hat an ihrer Innenseite eine Nut, in welche die Haltekugel in der Freigabestellung der Betätigungshülse eintauchen kann. Das Betätigungselement ist somit durch Drehung zwischen einer Haltestellung und einer Freigabestellung zwischen einer Verriegelungskonfiguration und einer Freigabekonfiguration der Verriegelungseinrichtung umstellbar. Durch eine unbeabsichtigte Drehung des Betätigungselementes beispielsweise durch spielende Kinder kann die Kupplung versehendlich entriegelt werden, was unbeabsichtigten Fluidaustritt zur Folge haben kann.

Die US 5,871,241 zeigt eine Kupplungsanordnung, wie sie beispielsweise bei Feuerwehrschläuchen bekannt ist. Sie zeichnet sich dadurch aus, dass die ineinandersteckbaren Kupplungsteile eine nicht drehsymmetrische, aufeinander abgestimmte Form aufweisen. In einer ersten Relativposition der Kupplungsteile ist ein Ineinanderstecken bzw. Auseinanderziehen der Kupplungsteile möglich, wogegen eine Verdrehung im zusammengesteckten Zustand dazu führt, dass sich Elemente hintergreifen und keine axiale Verschiebung mehr möglich ist. Eine Sicherung gegen unbeabsichtigtes Lösen der Kupplung ist nicht vorgesehen.

Der Erfindung liegt die Aufgabe zugrunde, durch Bereitstellung eines einfach aufgebauten und einfache bedienbaren Kupplungsteiles eines Fluidkupplungsanordnung der eingangs erwähnten Art zu schaffen, bei der ein unbeabsichtigtes Lösen der Kupplung zuverlässig vermieden wird.

Diese Aufgabe wird durch ein Kupplungsteil mit den Merkmalen von Anspruch 1 bzw. eine Fluidkupplungsanordnung mit den Merkmalen von Anspruch 13 gelöst. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei einem derartigen Kupplungsteil wird die der Erfindung zugrunde liegende Aufgabe dadurch gelöst, dass das Betätigungselement relativ zum Grundkörper in Längsrichtung und um dessen Längsachse bewegbar angeordnet ist und zur Einstellung der Freigabestellung in einer ersten Richtung und zur Verstellung in die Haltestellung quer dazu in einer zweiten Richtung bewegbar ist, wobei Grundkörper und Betätigungselement mit zusammenwirkenden Anschlagmitteln versehen sind, die senkrecht zueinander verlaufende Führungen bieten. Durch die Erfindung bekommt das Betätigungselement eine weitere Funktionalität, ohne dass für die Bereitstellung einer Sperre zusätzliche Bauteile erforderlich wären. Durch die hierdurch mögliche, gezielte Sperrbarkeit des Freigebens der Kupplung ist für das Lösen der Kupplung eine vorherige, bewusste Rücknahme der Sperre erforderlich, so dass ein unbeabsichtigtes Lösen nicht mehr auftreten kann.

Die Verriegelungsstellung des Betätigungselementes unterscheidet sich deutlich von der Haltestellung. Sie ist der Haltestellung insofern ähnlich, als auch in der Verriegelungsstellung die Verriegelungselemente in einer Verriegelungskonfrguration vorliegen, die ein Lösen der Kupplungsteile voneinander verhindert. Jedoch ist, anders als bei der Haltestellung des Betätigungselementes, für die Freigabe der Kupplung keine einfache Bewegung in die Freigabestellung möglich, sondern es ist ein komplexerer Bewegungsablauf erforderlich, bei dem normalerweise das Betätigungselement zunächst zurück in die Haltestellung und dann erst in die Freigabestellung bewegt werden muß. Es ist unwahrscheinlich und praktisch ausgeschlossen, daß diese beiden vorzugsweise in unterschiedliche Richtungen verlaufenden Bewegungen unbeabsichtigt durchgeführt oder zufällig durch äußere Einwirkungen ausgelöst werden. Daher sind mit erfindungsgemäßen Kupplungsteilen ausgestattete Fluidkupplungsanordnungen besonders betriebssicher, ohne daß ihre Handhabung wesentlich verkompliziert würde.

Die Erfindung ist beispielsweise bei Schnellkupplungen der in der DE 34 90 017 gezeigten Art realisierbar, bei denen das Betätigungsorgan zum Einkuppeln aktiv in die Freigabestellung gebracht und anschließend zur Verriegelung der Kupplungsteile in seine Haltestellung bewegt werden muß. Besonders bevorzugt sind jedoch Ausführungsformen, bei denen die Kupplungsteile ohne Betätigung und/oder Bewegung des Betätigungselementes in die Kupplungsstellung gebracht werden können, weil dadurch das Zusammenstecken der Kupplungsteile besonders schnell und einfach möglich wird. Die Erfindung kann daher insbesondere bei allen in der DE 17 75 302 beispielhaft beschriebenen Ausführungsformen von Schnellkupplungen mit Vorteil eingesetzt werden. Deren Merkmale werden durch Bezugnahme zum Inhalt dieser Beschreibung gemacht.

Es kann also so sein, daß das Kupplungsteil einen Haupt- oder Grundkörper hat, in dem mehrere, beispielsweise drei um den Umfang des Hauptkörpers herum angeordnete Verriegelungselemente angeordnet sind. Die Verriegelungselemente liegen vorzugsweise in Form gesonderter Einlegekörper vor, die in Durchbrüchen des Hauptkörpers axial unverschieblich geführt sind und jeweils Nockenabschnitte haben, die dazu vorgesehen sind, in eine beispielsweise ringnutförmige Ausnehmung des anderen Kupplungsteils, beispielsweise eines Schlauchnippels, zur Verriegelung der Kupplungsteile aneinander unter Einwirkung einer Federkraft eingreifen. Das Nockenteil hat zweckmäßig an beiden axialen Stirnseiten Schrägflächen nach Art von Einlaufschrägen, wodurch unter anderem die Zusammensteckbarkeit der Kupplungsteile ohne Betätigung bzw. Bewegung des Betätigungselementes gefördert wird. Das Betätigungselement ist vorzugsweise eine den Grundkörper zumindest im Bereich der Verriegelungselemente umschließende Betätigungshülse, die an ihrer Innenseite Schließflächen aufweist, die mit den radialen Außenseiten bzw. Rücken der Verriegelungselemente so zusammenwirken, daß in der Haltestellung der Hülse die Verriegelungselemente radial nach außen abgestützt sind und sich derart zwischen Innenteil und Schließfläche verstemmen, daß eine Auswärtsbewegung weitgehend verhindert ist, während in der Freigabestellung der Hülse eine Auswärtsbewegung möglich ist, die das Auseinanderziehen der Kupplungsteile erlaubt. Das Umschalten zwischen Halte- und Freigabestellung kann durch Drehung der Hülse um ihre Längsachse oder durch axiale Verschiebung der Hülse erfolgen, wobei besonders bei axialer Verschiebbarkeit der Betätigungshülse zwischen Halte- und Freigabestellung eine Einhandbedienung der Kupplung bequem möglich ist.

Das Betätigungselement, das vorzugsweise hülsenförmig ist, aber auch eine von der Hülsenform abweichende Form haben kann, ist also vorzugsweise relativ zum Grundkörper des Kupplungsteils beweglich angeordnet, vorzugsweise in seine Haltestellung vorgespannt und zur Freigabe der Kupplung aus der Haltestellung in die Freigabestellung in einer Freigaberichtung zu bewegen, die bevorzugt die Längsrichtung des Kupplungsteiles bzw. des Grundkörpers ist. Eine besonders einfache Bedienung der Verriegelung wird dadurch erreicht, daß das Betätigungselement durch Bewegen in eine quer, insbesondere senkrecht zu dieser Freigaberichtung verlaufende Verriegelungsrichtung aus der Haltestellung in die Verriegelungsstellung bewegbar ist. Diese Verriegelungsrichtung ist bei längs verschieblichem Betätigungselement vorzugsweise die Umfangsrichtung der Kupplung, das Betätigungselement muß also zur Verriegelung ausgehend von der Haltestellung um die Längsachse der Kupplung verdreht werden. In Fällen von Betätigungselementen, deren Drehung eine Kupplungsfreigabe bewirkt, kann das Einstellen der Verriegelungsstellung entsprechend z.B. durch eine Längsverschiebung des Betätigungselementes erfolgen.

Bei diesen bevorzugten Weiterbildungen bleibt also die volle Funktionalität der bevorzugten und beispielsweise in der DE 17 75 302 beschriebenen Kupplungsteile erhalten und ein Benutzer kann derartige Kupplungen wie gewohnt bedienen. Gemäß den bevorzugten Ausführungsformen der Erfindung kommt zu dieser dem Benutzer vertrauten Funktionalität eine weitere hinzu, nämlich die Möglichkeit der Verriegelung der Kupplung gegen unbeabsichtigtes Lösen durch eine spezielle Bewegung der Betätigungshülse.

Bei bevorzugten Weiterbildungen läßt sich diese zusätzliche Sicherheitsfunktion ohne zusätzliche Bauteile an der Kupplung allein durch geeignete Modifikation der Form der schon vorhandenen Bauteile erzielen, indem insbesondere durch Ausbildung von zusammenwirkenden Vorsprüngen und Ausnehmungen Formschlußelemente geschaffen werden, die die Verriegelungsfunktion bewirken. Vorteilhaft wird das dadurch erreicht, daß das Betätigungselement, vorzugsweise an seiner dem Grundkörper zugewandten Innenseite, mindestens einen quer, insbesondere senkrecht zur Freigaberichtung verlaufenden Anschlag aufweist, der sich quer zur Freigaberichtung über eine begrenzte Anschlagslänge erstreckt und mit einem Gegenanschlag des Grundkörpers derart zusammenwirkt, daß das Betätigungselement ausgehend von der Haltestellung unter Umgehung des Anschlages in Freigaberichtung bis zur Freigabestellung bewegbar und ausgehend von der Verriegelungsstellung durch Anschlag des Anschlages an den Gegenanschlag in Freigaberichtung so gesperrt ist, daß eine direkte, geradlinige Bewegung in die Freigabestellung unmöglich ist. Zur Freigabe muß das Gegenelement also einen Umweg um den Anschlag machen, wozu das Betätigungselement entsprechend bewegt, insbesondere gedreht werden muß.

Alternativ oder zusätzlich ist es auch möglich, daß mindestens ein in Umfangsrichtung begrenzter Anschlag am Grundkörper vorgesehen ist und sich ein damit zusammenwirkendes Gegenelement am Betätigungselement befindet.

Fertigungstechnisch besonders vorteilhaft sind Weiterbildungen, bei denen der Anschlag und/oder der Gegenanschlag einstückig mit dem das jeweilige Element tragenden Bauteil, also dem Betätigungselement oder dem Grundkörper, ausgebildet ist. So lassen sich erfindungsgemäß arbeitende Kupplungsteile z.B. aus Kunststoff kostengünstig herstellen, indem die üblichen zur Herstellung verwendeten Formen geringfügig zur Formgebung für Anschläge bzw. Gegenanschläge modifiziert werden.

Zur Förderung einer einfachen und fehlerfreien Bedienung kann eine Anzeigeeinrichtung vorgesehen sein, mit deren Hilfe der gesperrte oder ungesperrte Zustand der Kupplung optisch erkennbar ist. Beispielsweise können am Grundkörper und am Betätigungselement Markierungen bzw. Kennzeichnungen beispielsweise durch Aufdrucken angebracht sein, deren relative Lage in gesperrtem und ungesperrtem Zustand verschieden ist.

Die Bediensicherheit läßt sich auch dadurch erhöhen, daß Rastmittel zur rastenden Festlegung des Betätigungselementes in der Haltestellung und in der Verriegelungsstellung vorgesehen sind, die derart ausgebildet sind, daß das Betätigungselement nur unter Überwindung eines Rastwiderstandes zwischen Haltestellung und Verriegelungsstellung umstellbar ist. Damit sind sowohl eine ungewollte Verriegelung der Kupplung als auch eine ungewollte Entriegelung erschwert und das Betätigungselement bleibt in der jeweiligen Stellung positionsstabil.

Weitere Vorteile und Merkmale der Erfindung ergeben sich aus den Ansprüchen. Nachfolgend sind Ausführungsbeispiele der Erfindung beschrieben und anhand der Zeichnungen dargestellt. In den Zeichnungen zeigen:
Fig. 1 eine schrägperspektivische Teilansicht einer ersten Ausführungsform eines Kupplungsteils für eine Schlauchkupplung,
Fig. 2 eine schrägperspektivische Ansicht einer anderen Ausführungsform eines Kupplungsteiles für eine Schlauchkupplung und
Fig. 3 einen vertikalen Längsschnitt durch ein Kupplungsteil ähnlich der in Fig. 1 gezeigten Ausführungsform zur näheren Erläuterung seiner Bestandteile.

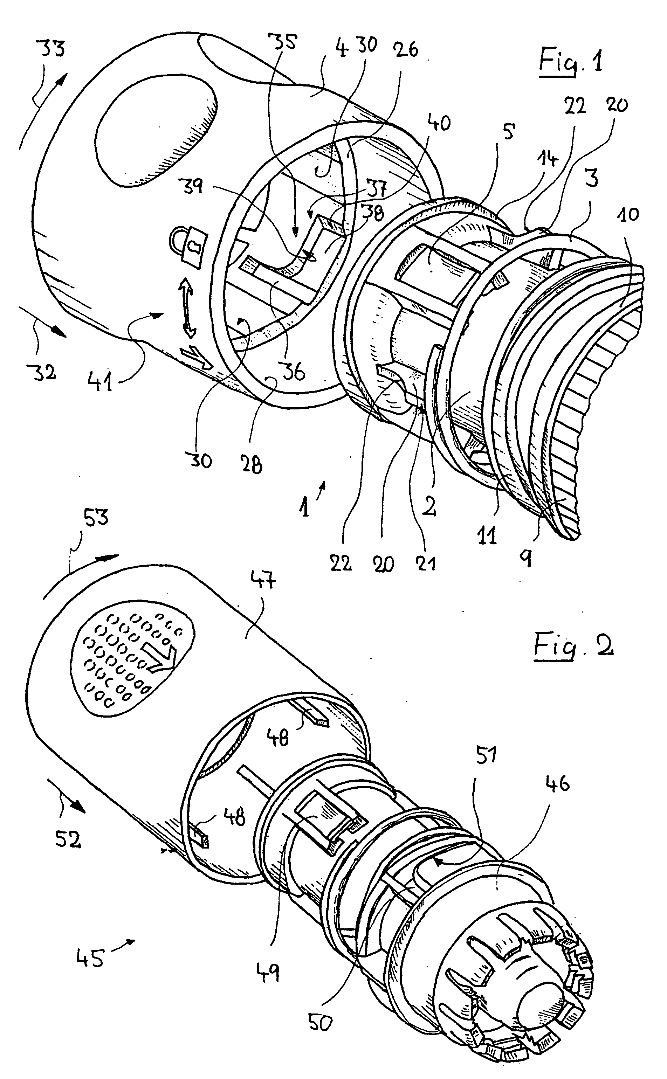

Die schrägperspektivische Teilansicht in Fig. 1 zeigt wesentliche Bestandteile einer ersten Ausführungsform eines Kupplungsteiles 1 für eine als Schlauchkupplung ausgebildete Fluidkupplungsanordnung, die als Steckkupplung ausgebildet ist und neben dem gezeigten Kupplungsteil ein weiteres, nicht gezeigtes Kupplungsteil, beispielsweise nach Art eines Schlauchnippels, umfaßt. Die Kupplungsteile können durch axiales Ineinanderschieben in eine fluiddichte Kupplungsstellung gebracht und durch Auseinanderziehen wieder voneinander gelöst werden.

Das Kupplungsteil ist mehrteilig aufgebaut und umfaßt einen vollständig aus Kunststoff gefertigten Grund- oder Hauptkörper 2, eine auf den Grundkörper aufschiebbare, metallische Schraubendruckfeder 3 und eine axial über die Spiraldruckfeder und den Grundkörper stülpbare und auf das Grundelement aufschnappbare Außenhülse 4, die als Betätigungselement des Kupplungsteiles dient. Der Hauptkörper 2 hat in einem Verriegelungsabschnitt drei gleichmäßig um seinen Umfang verteilte rechteckige Durchbrechungen, in die gesonderte, aus Kunststoff gefertigte und selbstfedernd ausgebildete Einlegekörper 5 axial unverschiebbar einlegbar sind. Die Einlegekörper 5 dienen als Verriegelungselemente und haben jeweils einen in das Innere des mit einer axialen Durchgangsöffnung versehenen Hauptkörpers hineinragende Nockenabschnitt 6, der zum Festhalten eines in das Kupplungsteil einsteckbaren Kupplungsnippel als Gegenstück der Fluidkupplungsanordnung in der Schlauchkupplung 1 ausgebildet ist.

Der Grundkörper 2 hat an seinem dem Einführende abgewandten Endabschnitt einen Schlauchanschlußabschnitt 7, in dem ein axial aufgestecktes Schlauchende durch Aufdrehen einer Überwurfmutter 9 auf ein Außengewinde 8 festgehalten werden kann. An das Gewinde 8 schließt sich ein ringbundförmiger Anschlag 10 für die Überwurfmutter an. Ein weiterer, zum Einführende hin mit Axialabstand folgender, ringbundartiger Anschlag 11 dient zur axialen Abstützung der Feder 3, die durch keilförmige Zentrierstege 12 zentriert wird. Mit Axialabstand vor den Zentrierstegen ist der Verriegelungsabschnitt mit drei gleichmäßig um den Umfang des Grundkörpers herum verteilten Durchbrechungen 13 für die Einlegekörper 5 ausgebildet. Am Einführende des Grundkörpers ist ein nach außen vorstehender Haltebund 14 angeformt, der zur unverlierbaren Sicherung der Hülse 4 am Grundkörper 2 dient.

Eine Besonderheit dieses Grundkörpers liegt nun darin, daß im Verriegelungsabschnitt mittig zwischen den jeweils um 120° gegeneinander umfangsversetzten Durchbrechungen bzw. Einlegekörpern drei um jeweils 120° gegeneinander versetzte Sperrrippen 20 einstückig mit dem Grundkörper ausgebildet sind. Die Sperrippen 20 verlaufen in Längsrichtung des Grundkörpers, stehen radial von diesem ab und haben jeweils eine im wesentlichen achsparallel verlaufende radiale Außenfläche, die in Radialrichtung den Außenumfang des Haftebundes 14 überragt, sowie eine zur Einfuhrseite hin gerichtete Schrägfläche 22.

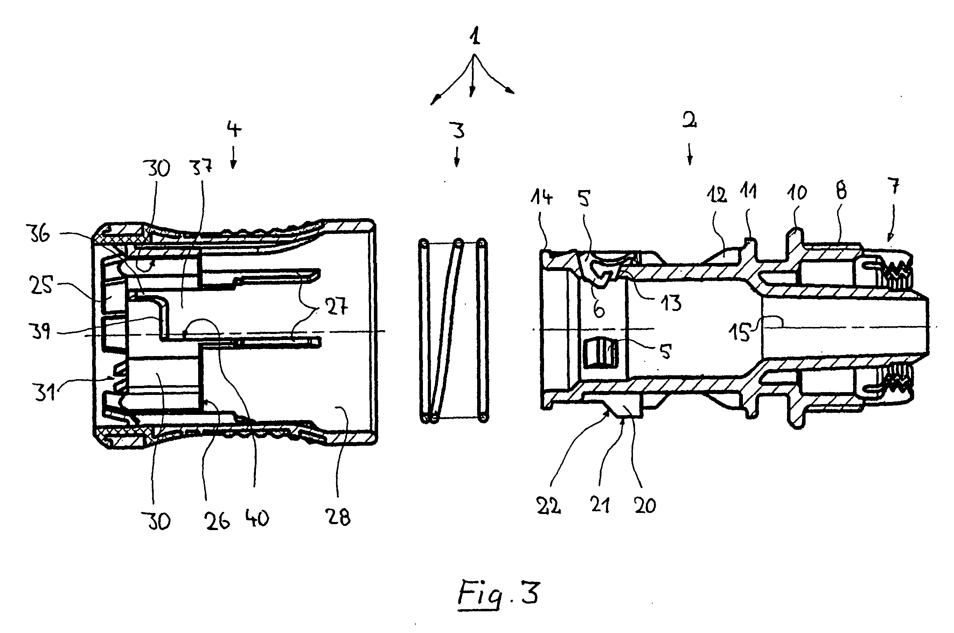

Die vollständig aus Kunststoff gefertigte und ggf. aus einem einzigen Teil (Fig. 1) bestehende Hülse 4 hat eine generell kreiszylindrische Grundform und ist am Außenumfang mit Griffmulden versehen, die bei den Ausführungen gemäß Fig. 2 und 3 noch mit Griffnoppen strukturiert sind, welche an gesonderten Einlegeelementen (Fig. 3) ausgebildet sein können. An der in Fig. 3 links liegenden Einführseite für das Kupplungsgegenstück ist ein Ring von nach innen angeschrägten, federelastischen Zungen 25 angeformt, die beim axialen Aufschieben der Hülse 4 auf den Grundkörper 2 unter leichter Aufbiegung über den Haltebund 14 hinweggleiten, anschließend nach radial innen schnappen und durch Anschlag am Haltebund 14 die aufgeschobene Hülse 4 unverlierbar am Grundkörper 2 sichern.

Mit Axialabstand zu den Haltezungen 25 ist an der Hülseninnenseite eine radiaieRingstufe 26 ausgebildet, die der axialen Abstützung der Feder 3 dient. Anschließend an den Anschlag 26 sind bei der in Fig. 3 gezeigten Ausführungsform nach innen gerichtete Längsrippen 27 ausgebildet, die bis in den Bereich zwischen den Zentrierrippen 12 ragen und bei Drehung der Hülse gegenüber dem Grundkörper durch Anschlag an die Rippen 12 die Drehbewegung in beiden Drehrichtungen begrenzen.

Die nach innen gerichtete Ringstufe 26 trennt den dem Grundkörper zuzuwendenden und bis auf die Rippen 27 zylindrischen Bereich 28 der Hülseninnenseite von einem Schließflächenbereich, der zwischen der Ringstufe 26 und den Zungen 25 angeordnet ist und im zusammengesetzten Zustand des Kupplungsteiles den Bereich der als Federnoppen 5 ausgebildeten Einlegekörper sowie der Sperrrippen 20 außen umschließt. Im Schließflächenbereich 29 sind drei um 120° umfangsversetzte, ebene Schließflächen 30 ausgebildet, an die sich zum Einfuhrende hin jeweils zwei dreieckförmige Stege 31 anschließen, deren nach innen gerichtete Schrägflächen Gleitflächen im Anschluß an die Schließflächen 30 bilden. Die Schließflächen 30 liegen dann, wenn sich die Betätigungshülse 4 gegenüber dem Grundkörper 2 in einer unverriegelten Drehstellung befindet, an den radialen Rückseiten bzw. Außenseiten der Federnoppen 5 an.

Wenn sich die Hülse 4 in ihrer Haltestellung befindet, die sich aufgrund der Kraft der Feder 3 selbsttätig einstellt, wenn die Hülse 4 losgelassen wird, stützen die Schließflächen 30 die Außenseite oder Rückseite der Federnocken auf voller Länge vollständig ab, so daß eine Auswärtsbewegung der Nockenabschnitte 6 unmöglich ist. Die Nocken verstemmen sich in dieser Verriegelungskonfiguration zwischen dem eingesteckten Kupplungsnippel und den Schließflächen 30 und bilden dadurch eine formschlüssige Auszugssicherung. Wird dagegen die Hülse 4 aus dieser Haltestellung durch Zurückziehen entgegen der Kraft der Feder 3 in Freigaberichtung 32 gezogen, so geraten die dem Haltebund 14 zugewandten Endbereiche der Federnoppen in den Bereich der Stege 31, wodurch eine schwenkende Auswärtsbewegung der Einlegekörper 5 möglich wird. In dieser Freigabestellung der Hülse 4 läßt sich daher ein eingestellter Kupplungsnippel aus dem Kupplungsteil herausziehen.

In Umfangsrichtung zwischen den Schließflächen 30 befinden sich bei den Ausführungsformen gemäß Fig. 1 und Fig. 3 drei um 120° umfangsversetzte, generell L-förmige Ausnehmungen 35 im Wandmaterial der Hülse 4. Die Ausnehmungen 35 sind zum Zusammenwirken mit den Sperrippen 20 ausgebildet und weisen jeweils einen nach Art einer axialen Längsnut ausgebildeten Axialführungsabschnitt 36 und einen an jeweils einer Seite daran anschließenden, axial kürzeren Verriegelungsabschnitt 37 auf. Der Verriegelungsabschnitt 37 hat eine ebene Bodenfläche 38, ist zum Grundkörper 2 hin geöffnet und bildet in der anderen Axialrichtung eine nach innen vorspringende Anschlagsfläche 39, die sich unter Ausbildung einer Krümmung ausgehend vom Führungsabschnitt 36 über einen Umfangswinkel von beispielsweise 40° bis 60° erstreckt.

In der unverriegelten Drehstellung der Hülse 4, d.h. dann, wenn die Schließflächen 30 direkt an den Rücken der Einlegekörper 5 anliegen, befinden sich die Axialführungen 36 in axialer Verlängerung der Sperrippen 20 des Grundkörpers. Bei Zurückziehen der Hülse 4 parallel zur Freigaberichtung aus der automatisch durch Federkraft eingestellten Haltestellung in eine Freigabestellung dringen die Sperrippen 20 in die Führungsabschnitte 36 ein, die auch gleichzeitig als Linearführung dienen und ab einer gewissen Eindringtiefe bzw. Rückzugsstellung der Hülse 4 eine Verdrehung der Hülse 4 gegenüber dem Grundkörper verhindern.

In der Ruhe- oder Haltestellung der Hülse 4, also bevor diese in Richtung Schlauchanschluß 7 zurückgezogen wird, ist aufgrund der einseitigen Erweiterung der Ausnehmung 35 und den hierdurch gebildeten Verriegelungsabschnitt 37 eine weitere Verstellmöglichkeit der Hülse gegenüber dem Grundkörper gegeben. In der Ruhestellung der Hülse befinden sich nämlich die nach außen durch die Flächen 21 abgeschlossenen Vorsprünge der Sperrippen 20 auf axialer Höhe der Verriegelungsabschnitte 37, so daß die Hülse 4, ausgehend von der Ruhestellung, auch um einen durch die Umfangserstrekung der Verriegelungsabschnitte 37 vorgegebenen, anschlagsbegrenzten Drehwinkelbetrag von z.B. 10° bis 90° gegenüber dem Grundkörper 2 verdreht werden kann. Bei dieser Verdrehung in Umfangsrichtung bzw. Verriegelungsrichtung 33 gleiten die radialen Außenflächen 21 der Sperrippen 20 auf den Bodenflächen 38 seitlich ab, bis die Sperrippen an den in Axialrichtung verlaufenden, seitlichen Begrenzungsflächen 40 der Ausnehmungen 35 anschlagen. Sobald die Sperrippen 20 in Umfangsrichtung 33 in die Verriegelungsbereiche 37 eindrehen, liegen sich die Schrägflächen 22 der Sperrippen 20 und die Anschlagsflächen 39 axial gegenüber, wodurch ein Zurückziehen der Hülse 4 in Freigaberichtung 32 durch Anschlag der Flächen 39, 22 aneinander verhindert wird. Die Freigabebewegung der Hülse ist also nach deren Verdrehung in Verriegelungsrichtung 33 gesperrt.

Aufgrund der Tatsache, daß die Bodenflächen 38 nicht zylindrisch gekrümmt, sondern eben sind, ist der Radialabstand zwischen der Zentralachse 15 des Kupplungsteiles 1 und der Innenwand der Hülse 4 im Bereich des Führungsabschnittes 36 und in der Nähe der seitlichen Begrenzungsflächen 40 größer als zwischen diesen Bereichen, so daß sich im Bereich der Nut 36 und nahe der Anschlagsfläche 40 energetisch gesehen Vorzugsstellungen für die Sperrippen befinden, in denen die Hülse 4 nicht oder nur geringfügig durch Druck von innen aufgeweitet ist. Hierdurch sind Rastmittel zur rastenden Festlegung des Betätigungselementes 4 in der Haltestellung und in der Verriegelungsstellung gebildet, zwischen denen nur durch Überwindung eines Rastwiderstandes umgeschaltete werden kann, der sich dadurch ergibt, daß sich bei der Umstellung der Radialdruck der Sperrippenaußenseiten 21 auf die Bodenflächen 38 erhöht.

Ausgehend von der Haltestellung oder Ruhestellung der Hülse 4 kann also diese durch Zurückziehen in eine Freigabestellung bewegt werden. Bei dieser in Freigaberichtung 32 verlaufenden Bewegung treten die Sperrippen 20 in die Linearführungen 36 ein und die vorderen Endabschnitte der Noppen 5 geraten in den Bereich der Schrägflächen 31 und lassen sich nach außen bewegen. Wird jedoch ausgehend von der Ruhestellung die Hülse 4 gegenüber dem Grundkörper so weit in Verriegelungsrichtung 33 verdreht, daß die Schrägflächen 22 der Sperrippen axial den Anschlagsflächen 39 der Hülse gegenüberliegen, so wird die Bewegung in Freigaberichtung 32 durch Anschlag der Sperrrippen 20 an die Anschlagsflächen 39 verhindert bzw. gesperrt. In dieser Drehstellung der Hülse 4 ist also eine Freigabe der Federnoppen 5 und damit eine Entriegelung der Kupplung zuverlässig verhindert. Insofern ist jede Drehstellung der Hülse 4 gegenüber dem Grundkörpers 2, in der die Sperrippen in axialer Verlängerung des quer zur Freigaberichtung verlaufenden Anschlages 39 liegen, eine Verriegelungsstellung des Kupplungsteiles, in der die Freigabebewegung durch formschlüssiges Zusammenwirken der Sperrippen 20 mit den Ausnehmungen 35 verhindert ist.

Es ist zu erkennen, daß das Kupplungsteil allein durch die besondere Formgebung der Außenseite des Grundkörpers (mit den einstückig mit diesem ausgebildeten Sperrippen 20) und der Hülse (mit den zweckmäßig geformten Ausnehmungen 35) eine zusätzliche Sicherungsfunktion erhalten hat. Diese ist dadurch gekennzeichnet, daß die Betätigungshülse 4 ausgehend von seiner Haltestellung durch begrenzte Drehung in eine die Freigabebewegung sperrende Verriegelungsstellung bewegt werden kann. Zur Erleichterung der Bedienung ist am Umfang der Hülse 4 eine Kennzeichnung 41 zur Angabe der Drehrichtung der Hülse zur Sperrung der Kupplung angebracht. Zusätzlich kann am Grundkörper eine korrespondierende Markierung vorgesehen sein, die es auf einen Blick ermöglicht zu erkennen, ob sich die Betätigungshülse in einer eine Freigabebewegung ermöglichenden Stellung (Pfeilsymbol) oder in einer die Freigabebewegung sperrenden Verriegelungsstellung (Schloßsymbol) befindet.

Die in Fig. 2 gezeigte andere Ausführungsform eines Kupplungsteils 45 hat ebenfalls einen Grundkörper 46 und eine Hülse 47 und stellt eine andere Möglichkeit dar, diese zweckmäßige Zusatzfunktion allein durch geeignete Formgebung von Grundkörper und Hülse zu schaffen. Die Innenseite der Hülse kann, genau wie die Ausführungsform gemäß Fig. 1 und 3, Schließflächen nach Art der Schließflächen 30, 31 aufweisen, die mit den Einlegekörpern 49 in den Durchbrechungen des Grundkörpers 46 in der beschriebenen Weise zusammenwirken. Die Verriegelungsfunktion ist hier dadurch gegeben, daß an der dem Grundkörper 46 zugewandten Innenwandung der Hülse 47 wenigstens eine Erhebung in Richtung des Grundkörpers 46 angeformt ist, wobei in der gezeigten Ausführungsform mehrere Erhebungen in Form von axialen Längsstegen 48 vorgesehen sind. Am Grundkörper sind korrespondierende, axiale Längsaussparungen 50 vorgesehen, die sich bei in Halte- bzw. Ruhestellung befindlicher Hülse 47 in axialer Verlängerung der Stege 48 befinden. Beim Verschieben der Hülse 47 aus der Ruhestellung in axialer Freigaberichtung 52 gleiten die Stege 48 in die Längsaussparungen 50 ein und die Hülse 47 kann soweit zurückgezogen werden, daß die Verriegelungselemente 49 zur Entriegelung freigegeben werden.

Die Hülse 47 ist aber nicht nur in Längsrichtung relativ zum Grundkörper 46 verschiebbar, sondern ausgehend von ihrer Ruhestellung auch gegen den Grundkörper in eine gesperrte Lage bzw. eine Verriegelungsstellung verdrehbar. Die Verdrehbarkeit in die Verriegelungsrichtung 53 ist in beide Richtungen vorteilhafterweise durch Begrenzungselemente eingeschränkt und kann einrastend erfolgen. Der Grundkörper weist jeweils einseitig anschließend an die Längsaussparungen 50 einen sich über einen Drehwinkel um die Längsachse von z.B. zwischen 10° und 90° erstreckenden Längsanschlag 51 auf. Beim Verdrehen der Hülse 47 in ihrer Ruhestellung gegenüber dem Grundkörper 46 um die Längsachse des Kupplungsteiles werden die Stege 48 in eine Position geschoben, in welcher in Längsrichtung anliegend oder in geringem Abstand gegenüberstehend die jeweils zugeordneten Längsanschläge 51 liegen, so daß keine oder zumindest keine nennenswerte, eine Lösung der Verriegelungselemente 49 bewirkende Längsverschiebung der Hülse gegenüber dem Grundkörper möglich ist. Eine Gegendrehung der Hülse 47 bringt diese wieder in die ungesperrte Lage, in der die Stege 48 wieder in die zugehörigen Längsaussparungen 50 längs verschiebbar sind.

Alternativ zu den beschriebenen Ausführungsformen kann auch vorgesehen sein, in einer gedrehten Lage der Hülsen, also in deren Verriegelungsstellung, nicht die Längsverschiebung der Hülse relativ zum Grundkörper zu verhindern, sondern lediglich die Freigabe der Verriegelungselemente 5 oder 49 bei einer Längsverschiebung zu unterbinden, so daß in der gesperrten Lage bzw. in der Verriegelungsstellung der Hülse die Hülse 4 bzw. 47 zwar noch längsverschiebbar ist, diese Längsverschiebung jedoch keine Freigabebewegung ist, da sie kein Lösen der Kupplung bewirken kann.

## Patentansprüche

1. Kupplungsteil für eine Fluidkupplungsanordnung, insbesondere eine Schlauchkupplung, die zwei durch Ineinanderstecken in eine Kupplungsstellung bringbare und durch Auseinanderziehen lösbare Kupp-lungsteile aufweist, wobei
- ein Kupplungsteil (2) eine zur Verriegelung der Kupplungsteile in der Kupplungsstellung vorgesehene Verriegelungseinrichtung (4, 5) enthält,
- die Verriegelungseinrichtung mindestens ein axial nicht verschiebbares und an einem Grundkörper angebrachtes Verriegelungselement (5, 49) und ein damit zusammenwirkendes Betätigungselement (4, 47) in der Form einer den Grundkörper umschließenden Hülse aufweist,
- die durch eine in eine Freigaberichtung (32, 52) verlaufende Freigabebewegung zwischen einer Haltestellung, in welcher die Kupplungsteile auszugsicher gehalten sind, und einer Freigabestellung, in welcher die Kupplungsteile von einander abziehbar sind, umstellbar ist,
**dadurch gekennzeichnet, dass** das Betätigungselement (4, 47) relativ zum Grundkörper (2, 46) in Längsrichtung und um dessen Längsachse bewegbar angeordnet ist und zur Einstellung der Freigabestellung in einer ersten Richtung (32, 52) und zur Verstellung in die Haltestellung quer dazu in einer zweiten Richtung bewegbar ist, wobei Grundkörper und Betätigungselement mit zusammenwirkenden Anschlagmitteln (20, 36, 48, 50) versehen sind, die senkrecht zueinander verlaufende Führungen (36, 39) bilden.

2. Kupplungsteil nach Anspruch 1, **dadurch gekennzeichnet, daß** die Kupplungsteile ohne Betätigung und/oder Bewegung des Betätigungselementes (4; 47) in die Kupplungsstellung bringbar sind.

3. Kupplungsteil nach Anspruch 1 oder 2, **dadurch gekennzeichnet, daß** das Betätigungselement (4; 47) an dem Kupplungsteil (1; 45) relativ zu einem Grundkörper (2; 46) des Kupplungsteils beweglich angeordnet, vorzugsweise in seine Haltestellung vorgespannt, und zur Freigabe der Verriegelungseinrichtung aus der Haltestellung in die Freigabestellung in eine Freigaberichtung (32; 52) bewegbar ist und durch Bewegung in einer quer, insbesondere senkrecht zur Freigaberichtung verlaufenden Verriegelungsrichtung (33; 53) in die Verriegelungsstellung bewegbar ist.

4. Kupplungsteil nach Anspruch 3, **dadurch gekennzeichnet, daß** die Bewegung in die Freigaberichtung (32; 52) eine Verschiebung in Längsrichtung des Grundkörpers (2; 46) und die Bewegung in die Verriegelungsrichtung (33; 53) eine Drehung des Betätigungselements um die Längsachse (15) des Grundkörpers ist.

5. Kupplungsteil nach einem der vorhergehenden Ansprüche, **dadurch gekennzeichnet, daß** das Betätigungselement eine Betätigungshülse (4; 47) ist, die ein Grundelement (2; 46) des Kupplungsteiles (1; 45) umschließt.

6. Kupplungsteil nach einem der vorhergehenden Ansprüche, **dadurch gekennzeichnet, daß** das Betätigungselement (4), vorzugsweise an seiner dem Grundkörper (2) zugewandten Innenseite, mindestens einen quer, insbesondere senkrecht zur Freigaberichtung (32) verlaufenden Anschlag (39) aufweist, der sich quer zur Freigaberichtung über eine begrenzte Anschlagslänge erstreckt und mit einem Gegenanschlag (22) des Grundkörpers derart zusammenwirkt, daß das Betätigungselement ausgehend von der Haltestellung unter Umgehung des Anschlages (39) in Freigaberichtung bis in die Freigabestellung bewegbar und ausgehend von der Verriegelungsstellung durch Anschlag des Gegenelements (20) am Anschlag (39) in Freigaberichtung (32) gesperrt ist.

7. Kupplungsteil nach einem der vorhergehenden Ansprüche, **dadurch gekennzeichnet, daß** das Grundelement (46), vorzugsweise an seiner dem Betätigungselement (47) zugewandten Außenseite, mindestens einen quer, insbesondere senkrecht zur Freigaberichtung (52) verlaufenden Anschlag (51) aufweist, der sich quer zur Freigaberichtung über eine begrenzte Anschlagslänge erstreckt und mit einem Gegenanschlag (48) des Betätigungselementes (47) derart zusammenwirkt, daß das Betätigungselement ausgehend von der Haltestellung unter Umgehung des Anschlages (51) in Freigaberichtung bis zur Freigabestellung bewegbar und ausgehend von der Verriegelungsstellung durch Anschlag des Gegenelementes (48) am Anschlag (51) in Freigaberichtung (52) gesperrt ist.

8. Kupplungsteil nach einem der Ansprüche 6 oder 7, **dadurch gekennzeichnet, daß** der Anschlag (40; 51) und/oder das Gegenelement (20; 48) einstückig mit dem Betätigungselement (4; 47) bzw. dem Grundkörper (2; 46) ausgebildet ist.

9. Kupplungsteil nach einem der vorhergehenden Ansprüche, **dadurch gekennzeichnet, daß** mehrere, insbesondere drei, um den Umfang des Kupplungsteiles vorzugsweise gleichmäßig verteilte Anschläge (39; 51) und/oder Gegenelemente (20; 48) vorgesehen sind.

10. Kupplungsteil nach einem der vorhergehenden Ansprüche, **dadurch gekennzeichnet, daß** das Betätigungselement (4) oder der Grundkörper (46) mindestens eine im wesentlichen L-förmige Ausnehmung (35; 50, 51) aufweist, bei der ein quer zur Freigaberichtung (32; 52) verlaufender Schenkel einen Anschlag (39; 51) und ein in Freigaberichtung verlaufender Abschnitt (36; 50) eine Linearführung für das Gegenelement des Grundkörpers (2) bzw. des Betätigungselementes (47) bildet.

11. Kupplungsteil nach einem der vorhergehenden Ansprüche, **dadurch gekennzeichnet, daß** es eine Anzeigeeinrichtung (41) zur vorzugsweise optischen Anzeige der Haltestellung und der Verriegelungsstellung aufweist, insbesondere in Form von korrespondierenden Kennzeichnungen am Betätigungselement (4) und am Grundkörper (2), durch deren Relativstellung die Haltestellung und die Verriegelungsstellung erkennbar ist.

12. Kupplungsteil nach einem der vorhergehenden Ansprüche, **dadurch gekennzeichnet, daß** eine Rasteinrichtung zur rastenden Festlegung des Betätigungselementes (4) in der Ruhestellung und in der Verriegelungsstellung vorgesehen ist, die derart ausgebildet ist, daß das Betätigungselement (4) nur unter Überwindung eines Rastwiderstandes zwischen Haltestellung und Verriegelungsstellung umstellbar ist.

13. Fluidkupplungsanordnung, insbesondere Schlauchkupplung, mit zwei durch Ineinanderschieben in eine Kupplungsstellung bringbaren und durch Auseinanderziehen voneinander lösbaren Kupplungsteilen, **dadurch gekennzeichnet, daß** eines der Kupplungsteile (1; 45) gemäß mindestens einem der Ansprüche 1 bis 12 ausgebildet ist.

## Claims

1. Coupling part for a fluid coupling device, particularly a hose coupling, which has two coupling parts which can be brought into a coupling position by fitting into one another and which can be released from one another by pulling apart, in which the coupling part (2) has a locking device (4; 5) for locking the coupling parts in the coupling position, the locking device has at least one axially non-displaceable locking element (5; 49) fitted to a base body and an actuating element (4; 47) cooperating therewith in the form of a sleeve surrounding the base body and which by a release movement running in a release direction (32; 52) can be shifted between a retaining position in which the coupling parts are retained in extraction-proof manner and a release position, in which the coupling parts can be detached from one another, **characterized in that** the actuating element (4; 47) is movably arranged relative to the base body (2; 46) in the longitudinal direction and about its longitudinal axis and for setting the release position is movable in a first direction (32; 52) and for adjusting in the retaining position transversely thereto in a second direction, the base body and the actuating element being provided with cooperating stop means (20; 36; 48; 50), which form guides (36; 39) running perpendicular to one another.

2. Coupling part according to claim 1, **characterized in that** the coupling parts can be brought into the coupling position without actuation and/or movement of the actuating element (4; 47).

3. Coupling part according to claim 1 or 2, **characterized in that** the actuating element (4; 47) is arranged in movable manner on the coupling part (1; 45) relative to a basic body (2; 46) of the coupling part and is preferably pretensioned in its retaining position and for the release of the locking device from the retaining position into the release position is movable in a release direction (32; 52) and can be moved into the locking position by movement in a locking direction (33; 53) transverse and in particular perpendicular to the release direction.

4. Coupling part according to claim 3, **characterized in that** the movement in the release direction (32; 52) is a displacement in the longitudinal direction of the basic body (2; 46) and the movement in the locking direction (33; 53) a rotation of the actuating element about the longitudinal axis (15) of the basic body.

5. Coupling part according to one of the preceding claims, **characterized in that** the actuating element is an actuating sleeve (4; 47), which embraces a basic body (2; 46) of the coupling part (1; 45).

6. Coupling part according to one of the preceding claims, **characterized in that** the actuating element (4), preferably on its inside facing the basic body (2), has at least one stop (39) transverse and in particular perpendicular to the release direction (32) and extending transversely to the release direction over a limited stop length and which cooperates with a counterstop (22) of the basic body in such a way that the actuating element, starting from the retaining position and whilst bypassing the stop (39), is movable in the release direction into the release position and, starting from the locking position, is blocked by the counterelement (20) striking against the stop (39) in the release direction (32).

7. Coupling part according to one of the preceding claims, **characterized in that** the basic body (46), preferably on its outside facing the actuating element (47), has at least one stop (51) transverse and in particular perpendicular to the release direction (52) and which extends transversely to the release direction over a limited stop length and which cooperates with a counterstop (48) of the actuating element (47) in such a way that the actuating element, starting from the retaining position and whilst bypassing the stop (51), is movable in the release direction to the release position and, starting from the locking position, is blocked by the counterelement (48) striking against the stop (51) in the release direction (52).

8. Coupling part according to one of the claims 6 or 7, **characterized in that** the stop (40; 51) and/or the counterelement (20; 48) is constructed in one piece with the actuating element (4; 47) or the basic body (2; 46).

9. Coupling part according to one of the preceding claims, **characterized in that** several, particularly three stops (39; 51) and/or counterelements (20; 48) are preferably uniformly distributed about the circumference of the coupling part.

10. Coupling part according to one of the preceding claims, **characterized in that** the actuating element (4) or basic body (46) has at least one substantially L-shaped recess (35; 50; 51), in which a leg transversely to the release direction (32; 52) forms a stop (39; 51) and a portion (36; 50) in the release direction forms a linear guide for the counterelement of the basic body (2) or actuating element (47).

11. Coupling part according to one of the preceding claims, **characterized in that** it has an indicating device (41) for a preferably optical indication of the retaining position and the locking position, particularly in the form of corresponding markings on the actuating element (4) and on the basic body (2), whose relative positioning makes it possible to recognize the retaining position and the locking position.

12. Coupling part according to one of the preceding claims, **characterized in that** a latching device for the latching fixing of the actuating element (4) in the rest position and in the locking position is provided and which is constructed in such a way that the actuating element (4) can only be shifted between the retaining position and the locking position by overcoming a latching resistance.

13. Fluid coupling device, particularly hose coupling, with two coupling parts which can be brought into a coupling position by telescoping and which can be released by pulling apart, **characterized in that** one of the coupling parts (1; 45) is constructed in accordance with at least one of the claims 1 to 12.

## Revendications

1. Pièce de raccordement pour un dispositif de raccordement fluidique, notamment un raccord pour tuyaux souples, qui présente deux éléments de raccordement pouvant être mis en état d'accouplement par emboîtement et pouvant être détachés l'un de l'autre par dislocation linéaire,
- un élément de raccordement (2) contenant un dispositif de verrouillage (4, 5) prévu pour le verrouillage des éléments de raccordement en position accouplée,
- le dispositif de verrouillage présentant au moins un élément de verrouillage (5, 49), qui est prévu sur un corps de base et qui n'est pas déplaçable en direction axiale, et un élément d'actionnement (4, 47) agissant avec celui-ci, sous forme d'une douille qui entoure le corps de base,
- et qui peut être commutée par un mouvement de relâchement en direction de relâchement (32, 52) entre une position de retenue, où les éléments de raccordement sont gardés à l'épreuve d'un détachement par dislocation linéaire, et une position relâchée, où les éléments de raccordement peuvent être détachés par dislocation linéaire,
**caractérisée en ce que** l'élément d'actionnement (4, 47) est disposé par rapport au corps de base (2, 46) en direction longitudinale et movible autour de l'axe longitudinale de celui-ci et que, pour obtenir la position relâchée, il est déplaçable dans une première direction (32, 52) et que pour obtenir la position de retenue il est déplaçable transversalement par rapport à ceci dans une deuxième direction, le corps de base et l'élément d'actionnement étant munis de moyens d'arrêt (20, 36, 48, 50) concourants, qui forment les guidages (36, 39) orthogonaux entre eux.

2. Pièce de raccordement d'après la revendication 1, **caractérisée en ce que** les éléments de raccordement peuvent être mis en état raccordé sans devoir actionner et/ou déplacer l'élément d'actionnement (4 ; 47).

3. Pièce de raccordement d'après la revendication 1 ou 2, **caractérisée en ce que** l'élément d'actionnement (4 ; 47) est disposé sur la pièce de raccordement (1 ; 45) en étant movible par rapport à un corps de base (2 ; 46) de la pièce de raccordement; qu'il est précontraint de préférence en position de retenue, et que pour le déblocage du dispositif de verrouillage à partir de la position de retenue dans la position relâchée il peut être déplacé dans une direction de relâchement (32 ; 52) et qu'il peut être déplacé en position verrouillée dans une direction de verrouillage (33 ; 53) par un mouvement, qui s'étend en direction transversale, notamment orthogonale par rapport à la direction de relâchement.

4. Pièce de raccordement d'après la revendication 3, **caractérisée en ce que** le mouvement en direction de relâchement (32 ; 52) est un déplacement en direction longitudinale du corps de base (2 ; 46) et que le mouvement en direction de verrouillage (33 ; 53) est un mouvement rotatoire de l'élément d'actionnement autour de l'axe longitudinale (15) du corps de base.

5. Pièce de raccordement d'après une des revendication précédentes, **caractérisée en ce que** l'élément d'actionnement est une douille d'actionnement (4 ; 47), qui comprend un élément de base (2 ; 46) de la pièce de raccordement (1 ; 45).

6. Pièce de raccordement d'après une des revendication précédentes, **caractérisée en ce que** l'élément d'actionnement (4) présente, de préférence à sa face intérieure orientée vers le corps de base (2), au moins un arrêt (39), qui s'étend en direction transversale, notamment orthogonale par rapport à la direction de relâchement (32), et qui s'étend de façon transversale par rapport à la direction de relâchement sur une longueur limitée d'arrêt et qui agit avec un contre-arrêt (22) du corps de base, de manière que l'élément d'actionnement soit déplaçable en direction de relâchement à partir d'une position de retenue, en évitant l'arrêt (39), jusque dans la position relâchée et de manière qu'il soit bloqué en direction de relâchement (32) à partir de la position verrouillée par aboutissement du contre-élément (20) auprès de l'arrêt (39).

7. Pièce de raccordement d'après une des revendication précédentes, **caractérisée en ce que** l'élément de base (46) présente, de préférence à sa face extérieure orientée vers l'élément d'actionnement (47), au moins un arrêt (51), qui s'étend en direction transversale, notamment orthogonale par rapport à la direction de relâchement (52) et qui s'étend en direction transversale par rapport à la direction de relâchement sur une longueur limitée d'arrêt et qui agit avec un contre-arrêt (48) de l'élément d'actionnement (47), de manière que l'élément d'actionnement soit déplaçable en direction de relâchement à partir d'une position de retenue, en évitant l'arrêt (51), jusque dans la position relâchée et de manière qu'il soit bloqué en direction de relâchement (52) à partir de la position verrouillée par aboutissement du contre-élément (48) auprès de l'arrêt (51).

8. Pièce de raccordement d'après une des revendication 6 ou 7, **caractérisée en ce que** l'arrêt (40 ; 51) et/ou le contre-élément (20 ; 48) sont réalisés d'une seule pièce avec l'élément d'actionnement (4 ; 47) ou encore avec le corps de base (2 ; 46).

9. Pièce de raccordement d'après une des revendication précédentes, **caractérisée en ce qu'**on prévoit plusieurs, notamment trois arrêts (39 ; 51) et/ou contre-éléments (20 ; 48) distribués autour du périmètre de la pièce de raccordement de manière préférablement uniforme.

10. Pièce de raccordement d'après une des revendication précédentes, **caractérisée en ce que** l'élément d'actionnement (4) ou le corps de base (46) présente au moins un creux (35 ; 50, 51) essentiellement en forme de L, où une branche, s'étendant transversalement par rapport à la direction de relâchement (32 ; 52), forme un arrêt (39 ; 51) et une section (36 ; 50), s'étendant en direction de relâchement, forme un guidage linéaire pour lé contre-élément du corps de base (2) ou encore de l'élément d'actionnement (47).

11. Pièce de raccordement d'après une des revendication précédentes, **caractérisée en ce qu'**elle présente un dispositif indicateur (41) pour l'affichage préférablement optique du positionnement de retenue et du positionnement verrouillé, notamment sous forme de marques correspondantes sur l'élément d'actionnement (4) et sur le corps de base (2), dont la position relative permet d'identifier le positionnement de retenue et le positionnement verrouillé.

12. Pièce de raccordement d'après une des revendication précédentes, **caractérisée en ce qu'**on prévoit un dispositif de crantage pour fixer à déclic l'élément d'actionnement (4) en position de repos et en position verrouillé, le dispositif de crantage étant réalisé de manière que l'élément d'actionnement peut être commuté entre la position de retenue et la position verrouillé uniquement en surmontant une résistance de crantage.

13. Dispositif de raccordement fluidique, notamment raccord pour tuyaux souples, avec deux éléments de raccordement pouvant être mis en état d'accouplement par emboîtement et pouvant être détachés l'un de l'autre par dislocation linéaire, **caractérisé en ce que** l'un des éléments de raccordement (1 ; 45) est réalisé d'après au moins une des revendications de 1 à 12.
